# EUROPEAN PATENT APPLICATION

(11) **EP 4 109 361 A1**
(43) Date of publication of application: **28.12.2022**
(21) Application number: 21216925.4
(22) Date of filing: 22.12.2021
(51) Int. Cl.: G06Q 10/06

(54) **VEHICLE DATA PROCESSING METHOD AND DEVICE**

(30) Priority: 22.06.2021 CN 202110689663
(71) Applicant: Zhiji Automotive Technology Co., Ltd., Shanghai 200131 (CN)
(72) Inventor: FAN, Shiyi, Shanghai, 200131 (CN); WANG, Ruixue, Shanghai, 200131 (CN); QIAN, Gang, Shanghai, 200131 (CN); FANG, Minwei, Shanghai, 200131 (CN); CHEN, Fei, Shanghai, 200131 (CN); YANG, Zhou, Shanghai, 200131 (CN)
(74) Representative: dompatent von Kreisler Selting Werner - Partnerschaft von Patent- und Rechtsanwälten mbB

(57) **Abstract**

A vehicle data processing method and device are provided. The vehicle data processing method includes: acquiring vehicle data; determining a degree of completion of a preset goal according to the vehicle data; and determining incentive reference data associated with an incentive to a user according to the degree of completion of the preset goal.

## Description

### Technical Field

The present disclosure relates to the technical field of vehicles, in particular to a vehicle data processing method and device.

### Background

In the process of using vehicles, a large amount of data can be generated. How to make full use of these data and provide users with a better experience is a problem worth thinking about. Accordingly, there is a need to optimize the processing of the vehicle data.

### Summary

One of the objects of the present disclosure is to provide a vehicle data processing method and device.

According to a first aspect of the present disclosure, a vehicle data processing method is provided, the vehicle data processing method includes: acquiring vehicle data; determining a degree of completion of a preset goal according to the vehicle data; and determining incentive reference data associated with an incentive to a user according to the degree of completion of the preset goal.

According to a second aspect of the present disclosure, there is provided a vehicle data processing device including a memory and a processor, the memory having stored thereon instructions that, when being executed by the processor, implement steps of the vehicle data processing method as described above.

According to a third aspect of the present disclosure, there is provided a non-transitory computer-readable medium having stored thereon instructions that, when being executed by a processor, implement steps of the vehicle data processing method as described above.

According to a fourth aspect of the present disclosure, there is provided a computer program product including instructions that, when being executed by a processor, implement steps of the vehicle data processing method as described above.

Other features and advantages of the embodiments of the present disclosure will become apparent from the following detailed description of the present disclosure with reference to the accompanying drawings.

### Brief Description of the Drawings

The accompanying drawings which form a part of the description illustrate embodiments of the present disclosure and together with the description serve to explain the principles of the present disclosure.

The present disclosure may be more clearly understood from the following detailed description with reference to the accompanying drawings, in which:
Fig. 1 shows a flow diagram of a vehicle data processing method according to an exemplary embodiment of the present disclosure;
Fig. 2 shows a flow diagram of step S200 in the vehicle data processing method according to a first specific example of the present disclosure;
Fig. 3 shows a flow diagram of step S200 in the vehicle data processing method according to a second specific example of the present disclosure;
Fig. 4 shows a flow diagram of step S200 in the vehicle data processing method according to a third specific example of the present disclosure;
Fig. 5 shows a flow diagram of step S200 in the vehicle data processing method according to a fourth specific example of the present disclosure;
Fig. 6 shows a flow diagram of step S200 in the vehicle data processing method according to a fifth specific example of the present disclosure;
Fig. 7 shows a flow diagram of step S200 in the vehicle data processing method according to a sixth specific example of the present disclosure;
Fig. 8 shows a flow diagram of a vehicle data processing method according to another exemplary embodiment of the present disclosure;
Fig. 9 shows a block diagram of a vehicle data processing device according to an exemplary embodiment of the present disclosure.

Note that in the embodiments described below, the same reference signs are sometimes used in common among different drawings to denote the same portions or portions having the same functions, and the description thereof is omitted. In this description, like reference signs and letters are used to denote like items, once a certain item is defined in one figure, it is not necessary to further discuss it in the following figures.

For ease of understanding, the positions, dimensions, ranges and the like of the structures shown in the drawings and the like sometimes do not represent actual positions, dimensions, ranges and the like. Therefore, the disclosed disclosure is not limited to the position, size, range, etc. disclosed in the drawings and the like. Further, the drawings need not be drawn to scale, and some features may be magnified to show details of specific components.

### Description of the Embodiments

Various exemplary embodiments of the present disclosure will be described in detail with reference to the accompanying drawings. It should be noted that unless otherwise specified, the relative arrangement, numerical expressions and values of components and steps set forth in these embodiments do not limit the scope of the present disclosure.

The following description of at least one exemplary embodiment is in fact merely illustrative and is in no way intended to limit the present disclosure and its application or use. That is, the methods and devices herein are illustrated by way of example to illustrate different embodiments of the circuits or methods in the present disclosure and are not intended to limit the present disclosure. Those skilled in the art will appreciate that they are merely illustrative of exemplary ways in which the present disclosure may be practiced and are not exhaustive.

Techniques, methods and devices known to those ordinarily skilled in the relevant art may not be discussed in detail, but where appropriate, the techniques, methods and devices should be regarded as part of the authorized description.

With the development of vehicle (e.g., electric vehicle) technology, more and more vehicle data generated during driving and use of the vehicle are collected and analyzed. For example, according to these vehicle data, a driving state of the vehicle, driving habits of the user and the like can be monitored. Thus, the generated vehicle data is of great value. In order to encourage users and help them use the vehicles better, the users can be given certain incentives based on vehicle data. It will be appreciated that the directly generated vehicle data is often huge and complicated, so it is necessary for them to be effectively processed to help improve the use experience of vehicles.

In an exemplary embodiment of the present disclosure, vehicle data is processed based on a preset goal to determine the incentive reference data related to incentives to a user, thereby encouraging the user to use the vehicle in a desired manner and also helping to improve the use experience of the vehicle.

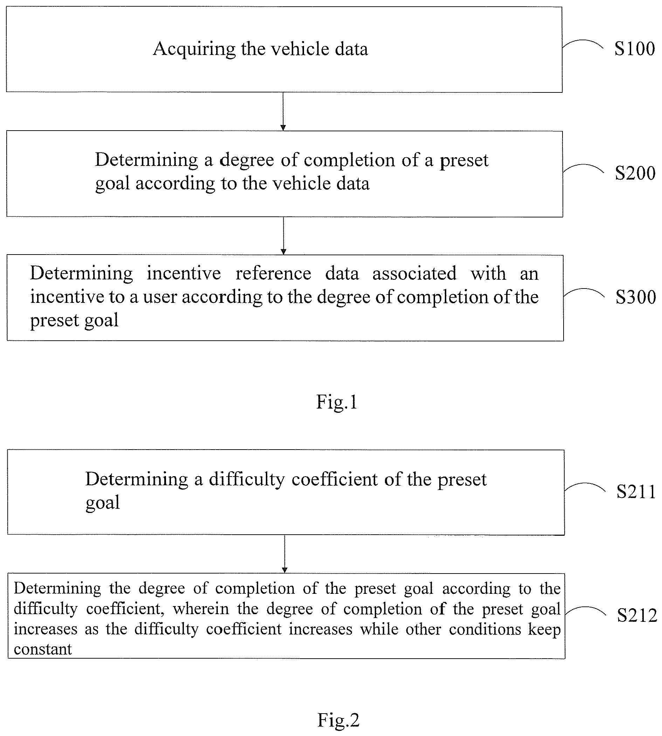

Specifically, in an exemplary embodiment of the present disclosure, as shown in Fig. 1, the vehicle data processing method may include:

Step S100, acquiring vehicle data.

The vehicle data may include data related to the driving state of the vehicle such as actual mileage data, start acceleration data, brake acceleration data, direction change data and the like. The data related to the driving state of the vehicle can be obtained by relevant sensors loaded on the vehicle, such as an odometer, an accelerometer, a steering sensor, etc., and transmitted by these sensors directly to a device for processing the vehicle data or transmitted via a corresponding communication device to a device for processing the vehicle data. The device for processing the vehicle data may be a data processing device such as a central server provided outside the vehicle, or a data processing device provided on the vehicle. In addition, the vehicle data may also include data generated by the user during the use of the vehicle, including, for example, user identification data for user authentication, vehicle identification data for vehicle authentication, driving image data (including a driving image recorded by a driving recorder or a driving image photographed by a user through a mobile terminal, a camera, a video camera, etc.), driving position data for positioning a vehicle, function recording data for recording various functions in a vehicle used by a user, etc. In some embodiments, the vehicle data may be acquired directly through a data transfer channel during the driving of the vehicle, or acquired only after being screened and authorized by the user.

Returning to Fig. 1, the vehicle data processing method may further include:

step S200, determining the degree of completion of the preset goal according to the vehicle data. Here, the degree of completion of the preset goal may include a percentage indicating the progress until full completion, while 0 indicates none is completed and 100% indicate the full completion.

The preset goal can be preset at the factory when the vehicle is shipped, or it can be released according to prevailing conditions. The preset goal may include an operation implementing type goal and a state maintaining type goal. In general, the operation implementing type goal may have a relatively definite completion time, for example, the operation implementing type goal may include a mapping goal, a new function usage goal, and the like. Specifically, in order to map a certain area, the vehicle data provided by users of vehicles that have been to this area can be fully utilized, thereby reducing the cost of mapping. The new function usage goal can encourage users to learn and use new functions in vehicles, so as to guide users to learn and help improve user experience. The new functions may include at least one of following functions: an autonomous driving function, an in-car fragrance function, ora light interaction function. It will be appreciated that with the further development of the vehicle, there may be other new functions, which are not limited here. By guiding users to use the new functions of vehicles, users can be better familiar with vehicles and driving.

According to the above description, the completion time of the mapping goal may be the time when all data required for mapping a specific area is obtained, and the completion time of the new function usage goal may be the time when it is confirmed that the user has learned, used or mastered a new function. On the contrary, the state maintaining type goal usually has no relatively certain completion time, which can be a requirement for the continuation of a certain state. For example, the state maintaining type goal can be a requirement for the users to maintain good driving habits, always perform safe driving operations, while avoiding unsafe operations, etc., so as to help improve driving safety.

In the embodiment of the present disclosure, the degree of completion of the preset goal may be determined according to a variety of factors, such as taking into account the completion time or holding time of the preset goal, the difficulty coefficient of completing the preset goal, the completion quality of the preset goal, and the like.

In some embodiments, as shown in Fig. 2, step S200 may include:
step S211, determining a difficulty coefficient of the preset goal; and
step S212, determining the degree of completion of the preset goal according to the difficulty coefficient, wherein the degree of completion of the preset goal increases as the difficulty coefficient increases while other conditions keep constant.

That is to say, the posted tasks can have different difficulty coefficients, and the users can choose to complete the preset goals with specific difficulty coefficients according to their own needs, and thus obtain the degree of completion of the corresponding preset goals, thus affecting the incentives for users in subsequent steps.

In some embodiments, the difficulty coefficient is not only related to the preset goal itself but may also be related to the vehicle or the user so that the difficulty coefficient may be determined at least in part from the vehicle data.

For example, in the mapping goal, the difficulty coefficient can be determined according to the distance between the mapped area and the frequently active area of the user, the traffic volume of the mapped area, the road condition of the mapped area, and the like. It is understandable that the greater the distance between the mapped area and the frequently active area of the user, the higher the difficulty coefficient may be. A higher difficulty coefficient may be set when the traffic volume of the mapped area is small (indicating that the area is deserted) or large (indicating that the area is congested), and a lower difficulty coefficient may be set when the traffic volume of the mapped area is moderate. When the road condition of the mapped area is worse, the higher the difficulty coefficient can be set. A higher difficulty coefficient can correspond to more incentives for users, thus encouraging them to achieve more difficult preset goals.

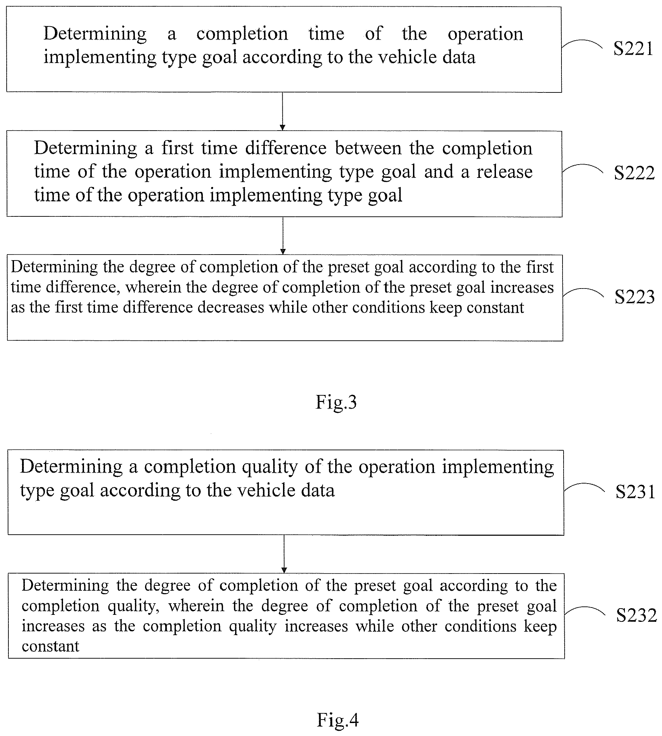

In some embodiments, as shown in Fig. 3, step S200 may include:
step S221, determining a completion time of the operation implementing type goal according to the vehicle data;
step S222, determining a first time difference between the completion time of the operation implementing type goal and a release time of the operation implementing type goal; and
step S223, determining the degree of completion of the preset goal according to the first time difference, wherein the degree of completion of the preset goal increases as the first time difference decreases while other conditions keep constant.

That is to say, the degree of completion of the preset goal can be determined according to a speed of completing the preset goal. The earlier the preset goal is completed, the higher the degree of completion will be obtained. In some embodiments, a cut-off time may also be set for the preset goal, and the corresponding degree of completion can be obtained only when the preset goal is completed before the cut-off time. For example, when a new function usage goal is set in order to promote a new function of a vehicle, such a cut-off time and a way of determining the degree of completion may be set to encourage a user to learn and use the new function more quickly.

In some embodiments, as shown in Fig. 4, step S200 may include:
step S231, determining a completion quality of the operation implementing type goal according to the vehicle data; and
step S232, determining the degree of completion of the preset goal according to the completion quality, wherein the degree of completion of the preset goal increases as the completion quality increases while other conditions keep constant.

It will be appreciated that there can be a higher degree of completion corresponding to a higher completion quality. When determining the completion quality, it can be achieved in many ways.

For example, a portion of vehicle data corresponding to the operation implementing type goal among the vehicle data of the plurality of vehicles may be compared, and the completion quality of the operation implementing type goal of each of the plurality of vehicles may be determined according to the result of the comparison. That is to say, the completion qualities of a plurality of vehicles can be sorted, and the corresponding completion qualities from high to low can be determined from the order of sorting from high to low.

Alternatively, a vote may be initiated on a portion of vehicle data corresponding to the operation implementing type goal among the vehicle data of the plurality of vehicles, and the completion quality of the operation implementing type goal of each of the plurality of vehicles may be determined according to the result of the vote. By initiating a user vote on the completion quality, it helps to improve interactivity and interest, and encourages users to better achieve preset goals.

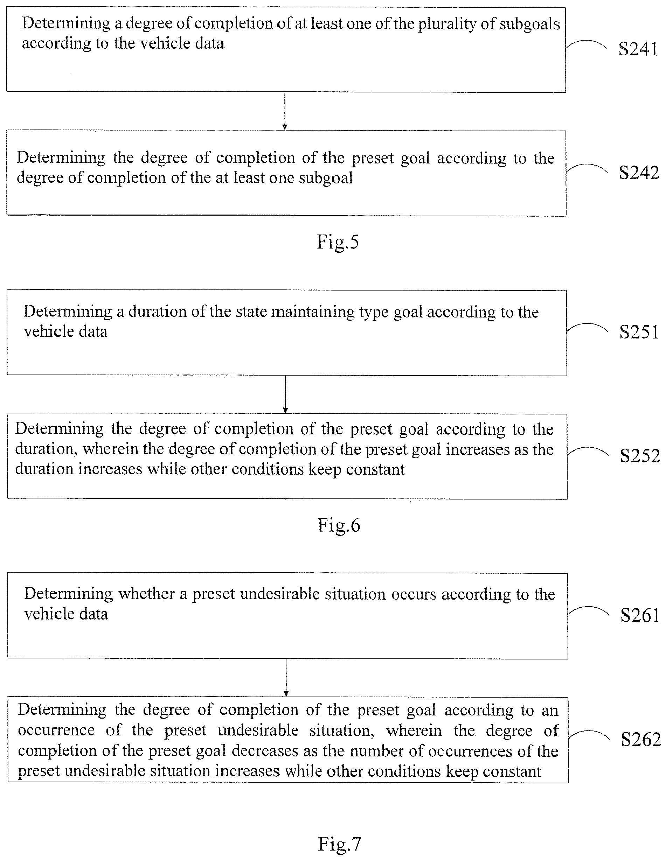

In some embodiments, as shown in Fig. 5, for certain preset goals, especially relatively complex preset goals, the preset goals may also be divided into a plurality of subgoals, and the degree of completion of the preset goals may be determined according to the completion situation of each subgoal. That is, step S200 may include:
step S241, determining a degree of completion of at least one of the plurality of subgoals according to the vehicle data; and
step S242, determining the degree of completion of the preset goal according to the degree of completion of the at least one subgoal.

Further, in determining the degree of completion of each subgoal, the degree of completion of the subgoal may be determined according to one or more of the difficulty coefficient, the completion time, and the completion quality as described above.

In a specific example, the operational implementation type goal may be a mapping goal with an expiration date of 30 days from the goal release date. Then, the degree of completion of the mapping goal can be determined according to the following criteria:
acquiring an image or a film taken by a user for mapping, the image or film may be a plurality of sheets or segments;
comparing all images or films submitted by users, obtaining the completion quality corresponding to an image or a film according to a clarity of the image or the film and a similarity between an image or a segment of film and other images or films, and assigning the user a corresponding degree of completion according to the completion quality of the image or film;
it is also possible to sort the completion time of each image or segment of film according to the order from morning till night, and to decrease the degree of completion step by step accordingly. For example, completing every three days late will result in a 2% decrease in the degree of completion.

A lottery may then be conducted based on the degree of completion to determine a reward for the user such as a virtual coin or the like.

For example, in the specific example described above, assuming that in the mapping goal, the total reward for completing tasks is 500 virtual coins. Then, rewards can be distributed according to the degree of completion ranking of multiple users, and the rewards are determined by the percentage of the winner's degree of completion out of the total degree of completion. For example, for the degree of completion of 80, 50, 50, 50 and 20 in the top 5, the highest first reward can be 500*80/(80+50+50+50+20) = 160 virtual coins, and other rewards and so on.

In some embodiments, state maintaining type goals are intended to help users develop good habits such as safe driving. Therefore, as shown in Fig. 6, determining the degree of completion of the preset goal according to the vehicle data may include:
step S251, determining a duration of the state maintaining type goal according to the vehicle data; and
step S252, determining the degree of completion of the preset goal according to the duration, wherein the degree of completion of the preset goal increases as the duration increases while other conditions keep constant.

The state maintaining type goals can include maintaining no speeding, no sharp turns, no sudden braking and starting, etc. In order to encourage users to maintain good driving habits all the time, with the increase of the duration of maintaining type goals, the degree of completion of the preset goals can increase faster. For example, if the user maintains not speeding for one month, it can correspond to a 1.1 -fold degree of completion, and if the user maintains not speeding for the next month, it can correspond to a higher 1.2-fold degree of completion.

In some embodiments, as shown in Fig. 7, determining a degree of completion of a preset goal based on vehicle data may also include:
S261, determining whether a preset undesirable situation occurs according to the vehicle data; and
step S262, determining the degree of completion of the preset goal according to an occurrence of the preset undesirable situation, wherein the degree of completion of the preset goal decreases as the number of occurrences of the preset undesirable situation increases while other conditions keep constant.

For example, the preset undesirable situation may include at least one of following situations: emergency start, emergency braking, frequent lane changes, improper use of vehicle lights, orimproper use of roads. The more times the above situation happens, the less the degree of completion will be. In addition, similar to the above, the degree of completion may also be nonlinearly reduced, for example, the more frequently the preset undesirable situation occurs, the faster the degree of completion decreases.

Returning to Fig. 1, the vehicle data processing method may further include:
step S300, determining incentive reference data associated with an incentive to a user according to the degree of completion of the preset goal.

The incentive reference data can take many forms, such as points, virtual coins etc. awarded to users. However, the incentive reference data may include converted mileage data of the vehicle in view of the characteristics in the field of vehicle technology. In determining an incentive to a user, the winning probability of a lottery for, for example, points, virtual coins, etc. can be adjusted according to the converted mileage data.

In some embodiments, step S300 may include:
performing a preset operation on the actual mileage data in the vehicle data to obtain the converted mileage data, wherein the preset operation is determined according to the degree of completion of the preset goal.

For example, the preset operation may include multiplying and dividing the actual mileage data by a corresponding factor or adding and subtracting the actual mileage data by a corresponding mileage. The above multiplied and divided factors or the mileage added and subtracted may be the degree of completion or be calculated from the degree of completion.

In some embodiments, when a user drives a vehicle to complete the mapping goal, corresponding converted mileage data may be obtained according to a product of actual mileage data generated during the mapping process and a weighting factor (typically greater than 1) determined by the degree of completion.

In some embodiments, a corresponding additional mileage determined by the degree of completion may be added to the actual mileage data to obtain the converted mileage data while the user is always driving safely.

In some embodiments, when the user drives a vehicle to run a red light, change lanes frequently, etc., the corresponding mileage may be deducted from the actual mileage data according to the number or frequency of these bad driving behaviors.

In some embodiments, when a user drives a vehicle over speed for a long period of time, a factor (less than 1) determined by the degree of completion may be multiplied based on the actual mileage data of the overspeed to reduce the converted mileage available to the user.

It will be understood that in other embodiments, the converted mileage data may also be calculated based on the actual mileage data according to other conditions and manners and will not be repeated here.

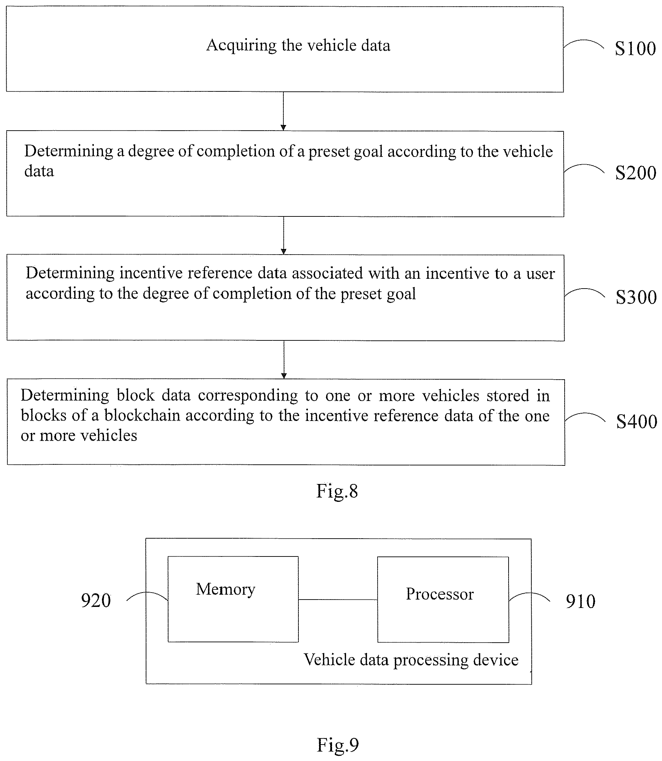

In another exemplary embodiment of the present disclosure, as shown in Fig. 8, the vehicle data processing method may further include:
step S400, determining block data corresponding to one or more vehicles stored in blocks of a blockchain according to the incentive reference data of the one or more vehicles.

In order to make the incentives to users open and fair, at least partial data or related data derived therefrom can be stored in blocks of the blockchain. In addition, by storing the converted mileage data in the blocks of the blockchain, the authenticity of these data can be confirmed more openly and convincingly. It can be understood that in order to save storage space and reduce maintenance costs, the stored data may be hash values of converted mileage data of a plurality of vehicles.

According to another aspect of the present disclosure, a vehicle data processing device is also proposed. As shown in Fig. 9, the vehicle data processing device may include a processor 910 and a memory 920 stored thereon instructions that, when being executed by the processor 910, can implement steps in the vehicle data processing method as described above.

The processor 910 may perform various actions and processes according to the instructions stored in the memory 920. Specifically, the processor 910 may be an integrated circuit chip having signal processing capability. The processor may be a general purpose processor, a digital signal processor (DSP), an application specific integrated circuit (ASIC), a Field Programmable Gate Array (FPGA) or other programmable logic devices, discrete gate or transistor logic devices, discrete hardware components. Various methods, steps and logic block diagrams disclosed in the embodiments of the present disclosure may be implemented or executed. The general purpose processor may be a microprocessor, or alternatively the processor can be any conventional processor etc. It may be an X86 framework processor or an ARM framework processor, etc.

The memory 920 stores with executable instructions that, when being executed by the processor 910, execute the vehicle data processing method described above. The memory 920 may be a volatile or a nonvolatile memory, or can include both volatile and nonvolatile memory. The non-volatile memory may be a read only memory (ROM), programmable read only memory (PROM), an erasable programmable read only memory (EPROM), an electrically erasable programmable read only memory (EEPROM), or flash memory. The volatile memory may be a random access memory (RAM) that serves as an external cache. By way of illustration but not limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Synchronous Link Dynamic Random Access Memory (SLDRAM), and Direct RamBus Random Access Memory (DR RAM). It should be noted that the memory of the method described herein is intended to include but is not limited to these and any other suitable types of memory.

According to another aspect of the present disclosure, there is provided a non-transitory computer-readable medium having stored thereon instructions that, when being executed by a processor, can implement steps of the vehicle data processing method as described above.

Similarly, the computer-readable storage media in embodiments of the present disclosure may be a volatile or a nonvolatile memory, or can include both volatile and nonvolatile memory. It should be noted that the computer-readable storage media described herein are intended to include but are not limited to these and any other suitable types of memory.

The present disclosure also proposes a computer program product including instructions that, when being executed by a processor, implement steps of the vehicle data processing method as described above.

The instructions may be any set of instructions to be executed directly (such as machine code) or indirectly (such as scripts) by the processor. The terms "instruction", "application", "process", "step" and "program" used herein are used interchangeably. The instructions may be stored in an object code format for direct processing by one or more processors, or in any other computer language, including scripts or collections of independent source code modules interpreted on demand or compiled in advance. The instructions may include instructions that cause, for example, one or more processors to serve as the respective neural networks herein. The functions, methods and routines of the instructions will be described in greater detail elsewhere herein.

In all the examples shown and discussed herein, any specific value should be interpreted as exemplary only and not as a limitation. Thus, other examples of the exemplary embodiment can have different values.

The terms "before", "after", "top", "bottom", "above", "below" and the like in the description and claims, if any, are used for descriptive purposes and are not necessarily for describing constant relative positions. It should be understood that the terms so used are interchangeable under appropriate circumstances so that the embodiments of the present disclosure described herein, for example, are capable of operation in other orientations than that described or illustrated herein.

As used herein, the term "exemplary" means "serving as an example, instance, or illustration" and not as a "model" to be precisely reproduced. Any implementation illustrated herein is not necessarily construed as preferred or advantageous over other implementations. Furthermore, the present disclosure is not limited by any expressed or implied theory given in the above technical field, background, summary or description of the embodiments.

As used herein, the term "substantially" is intended to encompass any minor change caused by design or manufacturing defects, tolerance of a device or element, environmental influences, and/or other factors. The term "substantially" also allows for differences from a perfect or ideal situation caused by parasitic effects, noise, and other practical considerations that may exist in the actual implementation.

The above description may indicate elements or nodes or features that are "connected" or "coupled" together. As used herein, "connect" means that one element/node/feature is electrically, mechanically, logically or otherwise directly connected (or in direct communication) with another element/node/feature, unless otherwise expressly stated. Similarly, unless otherwise expressly stated, "couple" means that one element/node/feature may be mechanically, electrically, logically or otherwise connected to another element/node/feature in a direct or indirect manner to allow interaction, even though the two features may not be directly connected. That is, "couple" is intended to encompass both direct and indirect connections of elements or other features, including connections using one or more intermediate elements.

It should also be understood that the term "comprise/include", when used herein, is intended to indicate the presence of the indicated features, entirety, steps, operations, units and/or components, but does not preclude the presence or addition of one or more other features, entirety, steps, operations, units and/or components and/or combinations thereof.

In some embodiments, the vehicle data includes at least one of following data: actual mileage data, start acceleration data, brake acceleration data, direction change data, user identification data, vehicle identification data, driving image data, driving position data, or function record data.

In some embodiments, the preset goal includes an operation implementing type goal.

In some embodiments, the determining a degree of completion of a preset goal according to the vehicle data includes:
determining a difficulty coefficient of the preset goal; and
determining the degree of completion of the preset goal according to the difficulty coefficient, wherein the degree of completion of the preset goal increases as the difficulty coefficient increases while other conditions keep constant.

In some embodiments, the difficulty coefficient is determined according to at least partial vehicle data.

In some embodiments, the determining a degree of completion of a preset goal according to the vehicle data includes:
determining a completion time of the operation implementing type goal according to the vehicle data;
determining a first time difference between the completion time of the operation implementing type goal and a release time of the operation implementing type goal; and
determining the degree of completion of the preset goal according to the first time difference, wherein the degree of completion of the preset goal increases as the first time difference decreases while other conditions keep constant.

In some embodiments, the determining a degree of completion of a preset goal according to the vehicle data includes:
determining a completion quality of the operation implementing type goal according to the vehicle data; and
determining the degree of completion of the preset goal according to the completion quality, wherein the degree of completion of the preset goal increases as the completion quality increases while other conditions keep constant.

In some embodiments, the determining a completion quality of the operation implementing type goal according to the vehicle data includes:
comparing a part of vehicle data corresponding to the operation implementing type goal in the vehicle data of a plurality of vehicles; and
determining the completion quality of the operation implementing type goal of each of the plurality of vehicles according to a result of the comparing.

In some embodiments, the determining a completion quality of the operation implementing type goal according to the vehicle data includes:
initiating a vote on the part of vehicle data corresponding to the operation implementing type goal in the vehicle data of the plurality of vehicles; and
determining the completion quality of the operation implementing type goal of each of the plurality of vehicles according to a result of the vote.

In some embodiments, the operation implementing type goal includes a plurality of subgoals, and the determining a degree of completion of a preset goal based on the vehicle data includes:
determining a degree of completion of at least one of the plurality of subgoals according to the vehicle data; and
determining the degree of completion of the preset goal according to the degree of completion of the at least one subgoal.

In some embodiments, the operation implementing type goal includes at least one of following goals: a mapping goal or a new function usage goal.

In some embodiments, the new function includes at least one of following functinios: an autopilot function, an in-car fragrance function, or a light interaction function.

In some embodiments, the preset goal includes a state maintaining type goal.

In some embodiments, the determining a degree of completion of a preset goal according to the vehicle data includes:
determining a duration of the state maintaining type goal according to the vehicle data; and
determining the degree of completion of the preset goal according to the duration, wherein the degree of completion of the preset goal increases as the duration increases while other conditions keep constant.

In some embodiments, the determining a degree of completion of a preset goal according to the vehicle data includes:
determining whether a preset undesirable situation occurs according to the vehicle data; and
determining the degree of completion of the preset goal according to an occurrence of the preset undesirable situation, wherein the degree of completion of the preset goal decreases as the number of occurrences of the preset undesirable situation increases while other conditions keep constant.

In some embodiments, the preset undesirable situation includes at least one of following situations: emergency start, emergency braking, frequent lane changes, improper use of vehicle lights, or improper use of roads.

In some embodiments, the incentive reference data includes converted mileage data.

In some embodiments, the determining incentive reference data associated with an incentive to a user according to the degree of completion of the preset goal includes:
performing a preset operation on the actual mileage data in the vehicle data to obtain the converted mileage data, wherein the preset operation is determined according to the degree of completion of the preset goal.

In some embodiments, the vehicle data processing method further includes:
determining block data corresponding to one or more vehicles stored in blocks of a blockchain according to the incentive reference data of the one or more vehicles.

Those skilled in the art will appreciate that the boundaries between the above operations are illustrative only. A plurality of operations may be combined into a single operation, the single operation may be distributed among additional operations, and the operations may be performed at least partially overlapping in time. Further, alternative embodiments may include multiple instances of specific operations and the order of operations may be changed in various other embodiments. However, other modifications, changes and substitutions are also possible. Therefore, the description and the accompanying drawings should be regarded as illustrative and not limiting.

While some specific embodiments of the present disclosure have been described in detail by way of examples, it should be understood by those skilled in the art that the above examples are for illustration only and are not intended to limit the scope of the present disclosure. Embodiments disclosed herein may be arbitrarily combined without departing from the scope of the present disclosure. Those skilled in the art will also appreciate that various modifications may be made to the embodiments without departing from the scope of the present disclosure. The scope of the present disclosure is defined by the appended claims.

## Claims

1. A vehicle data processing method comprising:
acquiring vehicle data;
determining a degree of completion of a preset goal according to the vehicle data; and
determining incentive reference data associated with an incentive to a user according to the degree of completion of the preset goal.

2. The vehicle data processing method of claim 1, wherein the vehicle data comprises at least one of following data: actual mileage data, start acceleration data, brake acceleration data, direction change data, user identification data, vehicle identification data, driving image data, driving position data, or function record data
preferably the preset goal comprises an operation implementing type goal.

3. The vehicle data processing method of claim 1 or 2, wherein determining a degree of completion of a preset goal based on the vehicle data comprises:
determining a difficulty coefficient of the preset goal; and
determining the degree of completion of the preset goal according to the difficulty coefficient, wherein the degree of completion of the preset goal increases as the difficulty coefficient increases while other conditions keep constant preferably the difficulty coefficient is determined according to at least partial vehicle data.

4. The vehicle data processing method of claim 2, wherein determining a degree of completion of a preset goal based on the vehicle data comprises:
determining a completion time of the operation implementing type goal according to the vehicle data;
determining a first time difference between the completion time of the operation implementing type goal and a release time of the operation implementing type goal; and
determining the degree of completion of the preset goal according to the first time difference, wherein the degree of completion of the preset goal increases as the first time difference decreases while other conditions keep constant.

5. The vehicle data processing method of claim 2, wherein determining a degree of completion of a preset goal based on the vehicle data comprises:
determining a completion quality of the operation implementing type goal according to the vehicle data; and
determining the degree of completion of the preset goal according to the completion quality, wherein the degree of completion of the preset goal increases as the completion quality increases while other conditions keep constant.

6. The vehicle data processing method of claim 5, wherein determining a completion quality of the operation implementing type goal according to the vehicle data comprises:
comparing a part of vehicle data corresponding to the operation implementing type goal in the vehicle data of a plurality of vehicles; and
determining the completion quality of the operation implementing type goal of each of the plurality of vehicles according to a result of the comparing.

7. The vehicle data processing method of claim 5 or 6, wherein determining a completion quality of the operation implementing type goal according to the vehicle data comprises:
initiating a vote on the part of vehicle data corresponding to the operation implementing type goal in the vehicle data of the plurality of vehicles; and
determining the completion quality of the operation implementing type goal of each of the plurality of vehicles according to a result of the vote.

8. The vehicle data processing method of any of claims 2 to 6, wherein the operation implementing type goal comprises a plurality of subgoals, and determining a degree of completion of a preset goal based on the vehicle data comprises:
determining a degree of completion of at least one of the plurality of subgoals according to the vehicle data; and
determining the degree of completion of the preset goal according to the degree of completion of the at least one subgoal preferably the operation implementing type goal comprises at least one of following goals: a mapping goal ora new function usage goal.

9. The vehicle data processing method of claim 11, wherein the new function comprises at least one of following functions: an autonomous driving function, an in-car fragrance function, ora light interaction function preferably the preset goal comprises a state maintaining type goal.

10. The vehicle data processing method of claim 9, wherein determining a degree of completion of a preset goal based on the vehicle data comprises:
determining a duration of the state maintaining type goal according to the vehicle data; and
determining the degree of completion of the preset goal according to the duration, wherein the degree of completion of the preset goal increases as the duration increases while other conditions keep constant.

11. The vehicle data processing method of claim 9 or 10, wherein determining a degree of completion of a preset goal based on the vehicle data comprises:
determining whether a preset undesirable situation occurs according to the vehicle data; and
determining the degree of completion of the preset goal according to an occurrence of the preset undesirable situation, wherein the degree of completion of the preset goal decreases as the number of occurrences of the preset undesirable situation increases while other conditions keep constant.

12. The vehicle data processing method of claim 11, wherein the preset undesirable situation comprises at least one of following situations: emergency start, emergency braking, frequent lane changes, improper use of vehicle lights, or improper use of roads.

13. The vehicle data processing method of any of claims 1 to 12, wherein the incentive reference data comprises converted mileage data.

14. The vehicle data processing method of claim 13, wherein determining incentive reference data associated with an incentive to a user according to the degree of completion of the preset goal comprises:
performing a preset operation on the actual mileage data in the vehicle data to obtain the converted mileage data, wherein the preset operation is determined according to the degree of completion of the preset goal.

15. The vehicle data processing method of claim 13 or 14, further comprising:
determining block data corresponding to one or more vehicles stored in blocks of a blockchain according to the incentive reference data of the one or more vehicles.
